# EUROPEAN PATENT SPECIFICATION

(11) **EP 2 457 401 B1**
(45) Date of publication and mention of the grant of the patent: **10.09.2014**
(21) Application number: 10737775.6
(22) Date of filing: 19.07.2010
(51) Int. Cl.: H04W 48/06

(54) **Method, system and base station for enhanced communication efficiency**
Verfahren, System und Basisstation zur verbesserten Kommunikationsleistungsfähigkeit
Procédé, système et station de base pour améliorer l'efficacité de communication

(30) Priority: 21.07.2009 EP 09009454; 21.07.2009 US 201161227256 P
(43) Date of publication of application: 30.05.2012
(73) Proprietor: T-Mobile Austria GmbH, 1030 Wien (AT)
(72) Inventor: PRECHTL, Christian, AT-1100 Wien (AT); WIRTHS, Wolfgang, 53125 Bonn (DE); FRÖLLER, Patrick, AT-2700 Wiener Neustadt (AT)
(74) Representative: Schwöbel, Thilo K.
(86) International application number: PCT/EP2010/004391
(87) International publication number: WO 2011/009578

(56) References cited:
- US-A- 5 794 140
- US-A- 5 970 403
- US-A1- 2006 286 964
- US-B1- 6 577 717

## Description

### BACKGROUND

The present invention relates to a method, a system and a base station that allows a more efficient communication within a cell of a cellular mobile radio network by optimizing the traffic load in a communication network.

The traffic capacity of conventional mobile radio networks has a utilization level which fluctuates greatly as a function of time, e.g. in the course of a day. At low traffic times, sometimes more than 90% of the existing capacity is not used. In order to assure an optimal quality of service within the mobile radio network, it is necessary to dimension the capacity of the mobile radio network according to peak demand times which means that for long periods of time no efficient use is made of the network equipment of the mobile radio network.

US patent document US 2006/0286964A1 discloses a method and controller in a communication system for determining the usage value of the communication system in a predefined area.

European Patent EP 1 326 453 B1 discloses an arrangement for optimizing the traffic load in a telecommunication and/or data network having a network operation control unit, a plurality of network elements which are functionally independent, and a plurality of content databases, wherein by means of an evaluation and decision unit load messages are evaluated and control signals are output to selected content databases for transmission predetermined contents or other information to user's telecommunication or data terminals connected to the communication network.

The drawback of such an approach is that network components such as the evaluation and decision unit needs knowledge of the communication needs of the terminals. This means that such communication needs are to be transmitted to such a network component prior to optimizing the network load, and stored in the network component or an assigned storage device. This increases the overhead for optimizing the network utilization level and necessitates the provision and maintenance of complex user interface solutions as well as storage capabilities as well as the need to assure data integrity and data security of such user specific data regarding communication requirements.

### SUMMARY

An object of the present invention is to provide a method, a system and a base station for enhanced communication efficiency that allows for an easy and flexible use of non used network transmission capacities in a cell of a cellular mobile radio network.

The object of the present invention is achieved by a method according to claim 1, a system according to claim 7 and a base transceiver station according to claim 8.

According to the present invention, it is thereby advantageously possible that the capacity of the mobile radio network is more efficiently used in a simple and flexible way for non-real-time related data.

In the context of the present invention, non-real-time related traffic data are data such as, e.g. text or e-mail messages, video data relating to a video content or the like that are not involved in a communication situation requiring immediate reaction. Communication situations involving immediate reaction comprise for example voice call communications or video call communications, whereas non-real-time related traffic data relate to, e.g., e-mail messages, Video on Demand (VoD) content (to be watched at a later time), or the like. For example, the base station (or another network entity) can define the time of transmission within a predefined time interval after the transmission request (of the mobile station), the predefined time interval being, e.g., a certain number of minutes (such as 5 or 10 or 15 or 20 or 25 or 30 or 35 or 40 or 45 or 50 or 55 minutes), or a certain number of hours (such as one hour or two hours or three hours), or a combination thereof.

The control message can be a standardized control message indicating that a preferred data transmission within the cell of the mobile radio network is possible and modified transmission conditions are to be applied.

According to the present invention, it is very much preferred that the control message is a CB (Cell Broadcast) message, especially a SMSCB message (Short Message Service Cell Broadcast). The SMSCB is a service in which short messages may be broadcast from a base station or BTS (Base Transceiver Station) of a PLMN (Public Land Mobile Network) to mobile stations or terminals. SMSCB messages can have different sources, e.g. traffic reports, weather reports or the like. The source and subject of the SMSCB message is identified by a message identifier in the SMSCB message header. A sequence number in the SMSCB message header enables the mobile station to determine when a new message from a given source is available.

Furthermore according to the present invention, it is preferred that the preferred time interval is a predetermined time interval, and wherein the modification information transmits explicitly or implicitly an information about the beginning and the end of the preferred time interval.

According to the present invention, the modification information transmits explicitly or implicitly an information about the quantity of traffic data to be transmitted from the base transceiver station to the mobile stations under the modified transmission conditions.

In both embodiments mentioned above, the beginning and the end of the allotted privileged communication conditions are advantageously defined by means of one single cell broadcast message defining either the time period or the quantity of data to be exchanged according to the preferred conditions. In the event that a user or a terminal (mobile station) needs to transmit (e.g. download) a comparably large quantity of data, it is possible to evaluate whether such a data transmission is possible within the allotted time or quantity of traffic data.

According to the present invention, the preferred time interval is a predetermined time interval, wherein the modification information transmits explicitly or implicitly an information about the beginning and the end of the preferred time interval, and wherein the modification information transmits explicitly or implicitly an information about the quantity of traffic data to be transmitted from the base transceiver station to the mobile stations under the modified transmission conditions.

According to this embodiment of the present invention, both the preferred time interval is predefined and the quantity of traffic data to be transmitted under the modified transmission conditions is predefined. Thereby, it is possible that the mobile station is able to at least potentially determine whether a specific data transmission is possible to realize or not (e.g. in a situation of non-optimal data transmission rate due to interference problems at the location of the mobile station).

According to still another embodiment of the present invention, it is preferred that the modification information transmits explicitly or implicitly an information only about the beginning of the preferred time interval, and wherein an information about the end of the preferred time interval is transmitted by means of a further control message from the base transceiver station to the mobile stations within the cell of the cellular mobile radio network.

According to this embodiment, the end of the preferred time interval is signaled to the mobile station by means of a further control message.

According to the present invention, it is very much preferred that the modification information indicates that within the preferred time interval, a lower price for the transmission of the traffic data is to be applied.

Thereby, it is advantageously possible to more effectively use the mobile radio network capacity also during such times where usually a low usage of the network is experienced.

Furthermore according to the present invention, it is preferred that the control message comprises the modification information indicating that modified transmission conditions are applied during a preferred time interval is transmitted in dependency of the traffic load of the cell of the cellular mobile radio network or in dependency of the traffic load of the cell and of adjacent cells of the cellular mobile radio network.

Thereby, it is advantageously possible that the method according to the present invention can also be applied for the case where a mobile station changes the cell of the mobile radio network.

The invention further relates to a system for enhanced communication efficiency according to claim 7.

The invention further relates to a base transceiver station for a cell of a cellular mobile radio network according to claim 8.

The invention further relates to a program comprising a computer readable program code for controlling a base transceiver station for a cell of a cellular mobile radio network according to claim 9.

The invention further relates to a computer program product comprising a computer readable program code according to the present invention for controlling a base transceiver station.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 shows schematically an example of a typical network utilization curve as a function of time.
Figure 2 shows schematically a cell of a mobile radio network.
Figures 3 and 4 show schematically an exchange of information between the base station and a mobile station according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

According to the present invention an enhanced communication efficiency - especially a better use of periods of time during which the communication capacity of the network is by far not completely used by normal voice and/or data traffic - within a cell of a cellular mobile radio network is possible to achieve by means of transmitting a control message from a base transceiver station to the mobile stations of the cell.

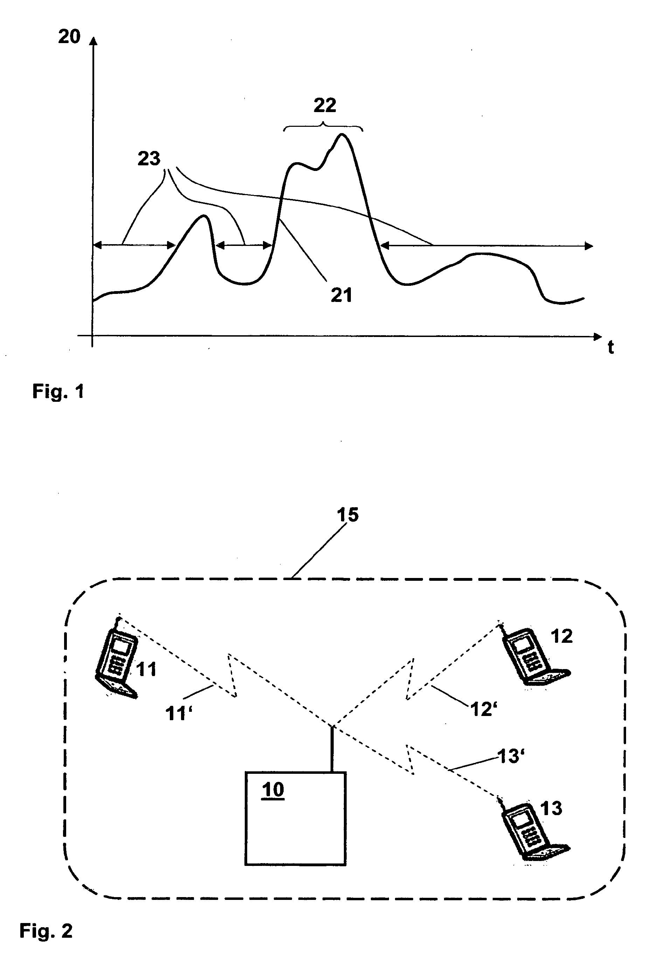

Figure 1 schematically shows an example of a typical network utilization curve 21 as a function of time t (abscissa). The ordinate (y-axis) corresponds to the network transport or network transmission capacity 20. The network utilization curve 21 shown can be divided into segments where a comparably high usage level is realised - an example of such a high-traffic time is designated by reference sign 22 - and into segments where a comparably low usage level is realised - examples of such low-traffic times are designated by reference sign 23.

Figure 2 shows schematically a cell 15 of a cellular mobile radio network. In the exemplary configuration shown in Figure 2, a base transceiver station 10 is connected to a plurality of mobile stations or mobile terminals. A first mobile station is designated by reference numeral 11. A second mobile station is designated by reference numeral 12. A third mobile station is designated by reference numeral 13. The base transceiver station 10 is connected to the first mobile station 11 by means of a first radio link 11'. The base transceiver station 10 is connected to the second mobile station 12 by means of a second radio link 12'. The base transceiver station 10 is connected to the third mobile station 13 by means of a third radio link 13'. It is evident, that the cell 15 can - dependent on the radio capacity of the mobile radio network and dependent on the capacity of the base transceiver station 10 - also comprise more than three active mobile devices 11, 12, 13.

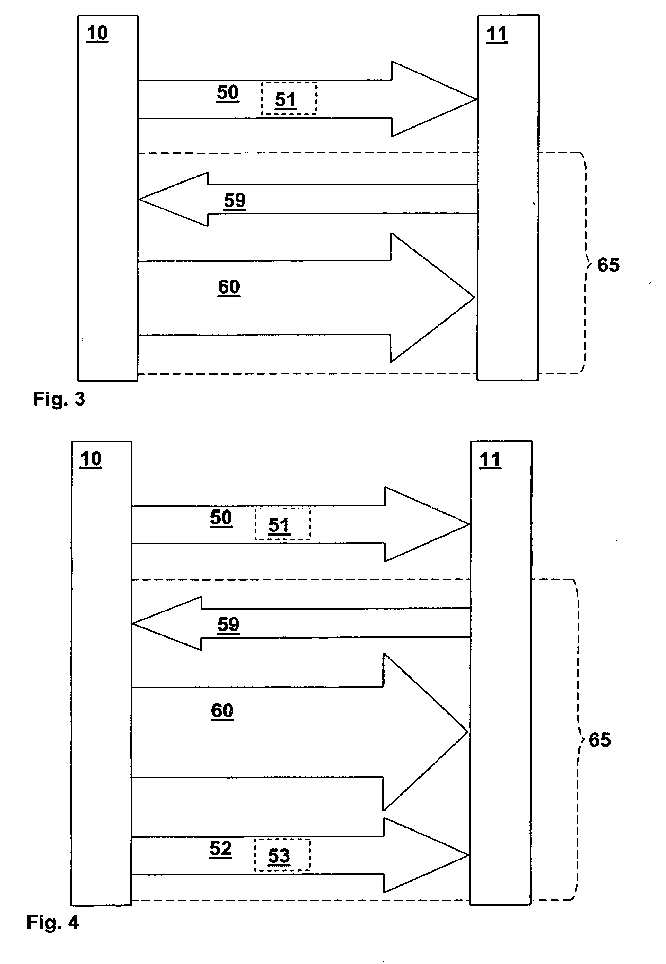

According to the present invention, the base transceiver station 10 can emit (via the radio links 11', 12', 13') a control message 50 to the mobile stations 11, 12, 13. For the exemplary situation of the base transceiver station 10 being in contact with the first mobile station 11 (i.e. one of the mobile stations 11, 12, 13), Figures 3 and 4 show different possibilities of such an exchange of information between the base station and a mobile station according to the present invention. It is evident that instead of the first mobile station 11, also the second mobile station 12 or the third mobile station 13 could have shown.

Figures 3 and 4 show the case where the base transceiver station 10 sends or transmits a control message 50. This control message is intended to inform all the mobile stations 11, 12, 13 within the cell 15 of the fact that modified transmission conditions can be applied during a so-called preferred time interval 65. The control message 50 is preferably a Cell Broadcast (CB) message. The control message 50 comprises a modification information 51 indicating (to the mobile stations 11, 12, 13 receiving the control message 50) that the modified transmission conditions can be applied.

In the case shown in Figure 3, the beginning and the end of the preferred time interval 65 is (implicitly or explicitly) predetermined by the control message 50. In this case, the first mobile station 11 sends a transmission request 59 to the base transceiver station 10 and traffic data 60 are sent from the base transceiver station 10 to the first mobile station 10. The request 59 to the base transceiver station 10 and the traffic data 60 concern non-real-time related traffic data 60, i.e. traffic data 60 that do not relate to a communication situation requiring immediate reaction. Communication situations involving immediate reaction comprise for example voice call communications or video call communications, whereas non-real-time related traffic data relate to, e.g., e-mail messages, Video on Demand (VoD) content (to be watched at.

Alternatively, a quantity of traffic data 60 can be defined by the control message 50 such that the first mobile station 11 is allowed to request this quantity of traffic data 60, e.g. 200 MB, under the modified transmission conditions.

Furthermore alternatively, both a quantity of traffic data 60 and a time interval 65 having a predefined beginning and a predefined end can be (explicitly or implicitly) transmitted by means of the control message 50.

In the case shown in Figure 4, only the beginning of the preferred time interval 65 is (implicitly or explicitly) defined by the control message 50. In this case, the first mobile station 11 sends a transmission request 59 to the base transceiver station 10 and traffic data 60 are sent from the base transceiver station 10 to the first mobile station 10. As the end of the preferred time interval 65 is not predefined, a further control message 52 is sent from the base transceiver station 10 to the first mobile station 11. The further control message 52 comprises a normalization information 53 indicating that the preferred time interval 65 has ended or that the preferred time interval 65 will end at a predetermined time.

## Claims

1. A method for enhanced communication efficiency within a cell (15) of a cellular mobile radio network, the method comprising the steps of:
providing a base transceiver station (10) and a plurality of mobile stations (11, 12, 13) in the mobile radio network cell (15),
transmitting a control message (50) from the base transceiver station (10) to the mobile stations (11, 12, 13),
the control message (50) comprising a modification information (51) indicating that modified transmission conditions are applied during a preferred time interval (65),
wherein for a transmission request (59) of one of the mobile stations (11, 12, 13) to the base transceiver station (10) within the preferred time interval (65) by which the base transceiver station (10) is requested to transmit non-real-time related traffic data (60) to the one of the mobile stations (11, 12, 13), the modified transmission conditions are applied, **characterized in that** the modification information (51) transmits explicitly or implicitly an information about the quantity of traffic data (60) to be transmitted from the base transceiver station (10) to the mobile stations (11, 12, 13) under the modified transmission conditions, wherein the preferred time interval (65) is a predetermined time interval, wherein the modification information (51) transmits explicitly or implicitly an information about the beginning and the end of the preferred time interval (65), and wherein the modification information (51) transmits explicitly or implicitly an information about the quantity of non-real-time related traffic data (60) to be transmitted from the base transceiver station (10) to the mobile stations (11, 12, 13) under the modified transmission conditions.

2. The method according to claim 1, wherein the control message (50) is a Cell Broadcast message.

3. The method according to claim 1 or 2, wherein the preferred time interval (65) is a predetermined time interval, and wherein the modification information (51) transmits explicitly or implicitly an information about the beginning and the end of the preferred time interval (65).

4. The method according to claim 1 or 2, wherein the modification information (51) transmits explicitly or implicitly an information only about the beginning of the preferred time interval (65), and wherein an normalization information (53) about the end of the preferred time interval (65) is transmitted by means of a further control message (52) from the base transceiver station (10) to the mobile stations (11, 12, 13) within the cell (15) of the cellular mobile radio network.

5. The method according to claim 1, wherein the modification information (51) indicates that within the preferred time interval (65), a lower price for the transmission of the traffic data (60) is to be applied.

6. The method according to claim 1, wherein the control message (50) comprises the modification information (51) indicating that modified transmission conditions are applied during a preferred time interval (65) is transmitted in dependency of the traffic load of the cell (15) of the cellular mobile radio network or in dependency of the traffic load of the cell (15) and of adjacent cells of the cellular mobile radio network.

7. A system for enhanced communication efficiency within a cell (15) of a cellular mobile radio network, the system comprising a base transceiver station (10) and a plurality of mobile stations (11, 12, 13) in the mobile radio network cell (15), wherein the system is configured such that a control message (50) is transmitted from the base transceiver station (10) to the mobile stations (11, 12, 13), the control message (50) comprising a modification information (51) indicating that modified transmission conditions are applied during a preferred time interval (65), wherein the system is configured such that for a transmission request (59) of one of the mobile stations (11, 12, 13) to the base transceiver station (10) within the preferred time interval (65) by which the base transceiver station (10) is requested to transmit non-real-time related traffic data (60) to the one of the mobile stations (11, 12, 13), the modified transmission conditions are applied, **characterized in that** the system is configured such that the modification information (51) transmits explicitly or implicitly an information about the quantity of traffic data (60) to be transmitted from the base transceiver station (10) to the mobile stations (11, 12, 13) under the modified transmission conditions, wherein the preferred time interval (65) is a predetermined time interval, wherein the system is configured such that the modification information (51) transmits explicitly or implicitly an information about the beginning and the end of the preferred time interval (65), and wherein the system is configured such that the modification information (51) transmits explicitly or implicitly an information about the quantity of non-real-time related traffic data (60) to be transmitted from the base transceiver station (10) to the mobile stations (11, 12, 13) under the modified transmission conditions.

8. A base transceiver station (10) for a cell (15) of a cellular mobile radio network, the cell (15) comprising a plurality of mobile stations (11, 12, 13), wherein the base transceiver station (10) is configured such that it transmits a control message (50) to the mobile stations (11, 12, 13), the control message (50) comprising an modification information (51) indicating that modified transmission conditions are applied during a preferred time interval (65), wherein the base transceiver station (10) is configured such that for a transmission request (59) of one of the mobile stations (11, 12, 13) to the base transceiver station (10) within the preferred time interval (65) by which the base transceiver station (10) is requested to transmit non-real-time related traffic data (60) to the one of the mobile stations (11, 12, 13), the modified transmission conditions are applied, **characterized in that** the base transceiver station (10) is configured such that the modification information (51) transmits explicitly or implicitly an information about the quantity of traffic data (60) to be transmitted from the base transceiver station (10) to the mobile stations (11, 12, 13) under the modified transmission conditions, wherein the preferred time interval (65) is a predetermined time interval, wherein the base transceiver station (10) is configured such that the modification information (51) transmits explicitly or implicitly an information about the beginning and the end of the preferred time interval (65), and wherein the base transceiver station (10) is configured such that the modification information (51) transmits explicitly or implicitly an information about the quantity of non-real-time related traffic data (60) to be transmitted from the base transceiver station (10) to the mobile stations (11, 12, 13) under the modified transmission conditions.

9. Program comprising a computer readable program code for controlling a base transceiver station (10) for a cell (15) of a cellular mobile radio network, the cell (15) comprising a plurality of mobile stations (11, 12, 13), wherein the base transceiver station (10) transmits a control message (50) to the mobile stations (11, 12, 13), the control message (50) comprising a modification information (51) indicating that modified transmission conditions are applied during a preferred time interval (65), wherein for a transmission request (59) of one of the mobile stations (11, 12, 13) to the base transceiver station (10) within the preferred time interval (65) by which the base transceiver station (10) is requested to transmit non-real-time related traffic data (60) to the one of the mobile stations (11, 12, 13), the modified transmission conditions are applied, **characterized in that** the modification information (51) transmits explicitly or implicitly an information about the quantity of traffic data (60) to be transmitted from the base transceiver station (10) to the mobile stations (11, 12, 13) under the modified transmission conditions, wherein the preferred time interval (65) is a predetermined time interval, wherein the modification information (51) transmits explicitly or implicitly an information about the beginning and the end of the preferred time interval (65), and wherein the modification information (51) transmits explicitly or implicitly an information about the quantity of non-real-time related traffic data (60) to be transmitted from the base transceiver station (10) to the mobile stations (11, 12, 13) under the modified transmission conditions.

10. Computer program product comprising a computer readable program code according to claim 9 for controlling a base transceiver station (10).

## Patentansprüche

1. Verfahren für eine verbesserte Kommunikationseffizienz in einer Zelle (15) eines zellularen Mobilfunknetzes, wobei das Verfahren die folgenden Schritte umfasst:
Bereitstellen einer Basissendeempfängerstation (10) und einer Mehrzahl von Mobilstationen (11, 12, 13) in der Mobilfunknetzzelle (15);
Übermitteln einer Steuernachricht (50) von der Basissendeempfängerstation (10) an die Mobilstationen (11, 12, 13);
wobei die Steuernachricht (50) Modifikationsinformationen (51) umfasst, die anzeigen, dass während einem bevorzugten Zeitintervall (65) modifizierte Übermittlungsbedingungen angewandt werden, wobei die modifizierten Übermittlungsbedingungen angewandt werden für eine Übermittlungsanforderung (59) einer der Mobilstationen (11, 12, 13) an die Basissendeempfängerstation (10) innerhalb des bevorzugten Zeitintervalls (65), durch welche die Basissendeempfängerstation (10) aufgefordert wird, relevante Nicht-Echtzeit-Verkehrsdaten (60) an eine der Mobilstationen (11, 12, 13) zu übermitteln, **dadurch gekennzeichnet, dass** die Modifikationsinformationen (51) explizit oder implizit Informationen zur Menge der unter den modifizierten Übermittlungsbedingungen von der Basissendeempfängerstation (10) zu den Mobilstationen (11, 12, 13) zu übermittelnden Verkehrsdaten (60) übermitteln, wobei das bevorzugte Zeitintervall (65) ein vorbestimmtes Zeitintervall ist, wobei die Modifikationsinformationen (51) explizit oder implizit Informationen über den Anfang und das Ende des bevorzugten Zeitintervalls (65) übermitteln, und wobei die Modifikationsinformationen (51) explizit oder implizit Informationen über die Menge der unter den modifizierten Übermittlungsbedingungen von der Basissendeempfängerstation (10) zu den Mobilstationen (11, 12, 13) zu übermittelnden relevanten Nicht-Echtzeit-Verkehrsdaten (60) übermitteln.

2. Verfahren nach Anspruch 1, wobei die Steuernachricht (50) eine Cell Broadcast-Nachricht ist.

3. Verfahren nach Anspruch 1 oder 2, wobei das bevorzugte Zeitintervall (65) ein vorbestimmtes Zeitintervall ist, und wobei die Modifikationsinformationen (51) explizit oder implizit Informationen über den Anfang und das Ende des bevorzugten Zeitintervalls (65) übermitteln.

4. Verfahren nach Anspruch 1 oder 2, wobei die Modifikationsinformationen (51) explizit oder implizit nur Informationen über den Anfang und das Ende des bevorzugten Zeitintervalls (65) übermitteln, und wobei Normalisierungsinformationen (53) über das Ende des bevorzugten Zeitintervalls (65) über eine weitere Steuernachricht (52) von der Basissendeempfängerstation (10) zu den Mobilstationen (11, 12, 13) in der Zelle (15) des zellularen Mobilfunknetzes übermittelt werden.

5. Verfahren nach Anspruch 1, wobei die Modifikationsinformationen (51) anzeigen, dass innerhalb des bevorzugten Zeitintervalls (65) ein niedrigerer Preis für die Übermittlung der Verkehrsdaten (60) anzuwenden ist.

6. Verfahren nach Anspruch 1, wobei die Steuernachricht (50), welche die Modifikationsinformationen (51) umfasst, die anzeigen, dass modifizierte Übermittlungsbedingungen während einem bevorzugten Zeitintervall (65) angewandt werden, abhängig von der Verkehrslast der Zelle (15) des zellularen Mobilfunknetzes oder abhängig von der Verkehrslast der Zelle (15) und benachbarter Zellen des zellularen Mobilfunknetzes übermittelt wird.

7. System für eine verbesserte Kommunikationseffizienz in einer Zelle (15) eines zellularen Mobilfunknetzes, wobei das System folgendes umfasst: eine Basissendeempfängerstation (10) und eine Mehrzahl von Mobilstationen (11, 12, 13) in der Mobilfunknetzzelle (15), wobei das System so konfiguriert ist, dass eine Steuernachricht (50) von der Basissendeempfängerstation (10) an die Mobilstationen (11, 12, 13) übermittelt wird, wobei die Steuernachricht (50) Modifikationsinformationen (51) umfasst, die anzeigen, dass während einem bevorzugten Zeitintervall (65) modifizierte Übermittlungsbedingungen angewandt werden, wobei das System so konfiguriert ist, dass die modifizierten Übermittlungsbedingungen angewandt werden für eine Übermittlungsanforderung (59) einer der Mobilstationen (11, 12, 13) an die Basissendeempfängerstation (10) innerhalb des bevorzugten Zeitintervalls (65), durch welche die Basissendeempfängerstation (10) aufgefordert wird, relevante Nicht-Echtzeit-Verkehrsdaten (60) an eine der Mobilstationen (11, 12, 13) zu übermitteln, **dadurch gekennzeichnet, dass** das System so konfiguriert ist, dass die Modifikationsinformationen (51) explizit oder implizit Informationen zur Menge der unter den modifizierten Übermittlungsbedingungen von der Basissendeempfängerstation (10) zu den Mobilstationen (11, 12, 13) zu übermittelnden Verkehrsdaten (60) übermitteln, wobei das bevorzugte Zeitintervall (65) ein vorbestimmtes Zeitintervall ist, wobei das System so konfiguriert ist, dass die Modifikationsinformationen (51) explizit oder implizit Informationen über den Anfang und das Ende des bevorzugten Zeitintervalls (65) übermitteln, und wobei das System so konfiguriert ist, dass die Modifikationsinformationen (51) explizit oder implizit Informationen über die Menge der unter den modifizierten Übermittlungsbedingungen von der Basissendeempfängerstation (10) zu den Mobilstationen (11, 12, 13) zu übermittelnden relevanten Nicht-Echtzeit-Verkehrsdaten (60) übermitteln.

8. Basissendeempfängerstation (10) für eine Zelle (15) eines zellularen Mobilfunknetzes, wobei die Zelle (15) eine Mehrzahl von Mobilstationen (11, 12, 13) umfasst, wobei die Basissendeempfängerstation (10) so konfiguriert ist, dass sie eine Steuernachricht (50) an die Mobilstationen (11, 12, 13) übermittelt, wobei die Steuernachricht (50) Modifikationsinformationen (51) umfasst, die anzeigen, dass während einem bevorzugten Zeitintervall (65) modifizierte Übermittlungsbedingungen angewandt werden, wobei die Basissendeempfängerstation (10) so konfiguriert ist, dass die modifizierten Übermittlungsbedingungen angewandt werden für eine Übermittlungsanforderung (59) einer der Mobilstationen (11, 12, 13) an die Basissendeempfängerstation (10) innerhalb des bevorzugten Zeitintervalls (65), durch welche die Basissendeempfängerstation (10) aufgefordert wird, relevante Nicht-Echtzeit-Verkehrsdaten (60) an eine der Mobilstationen (11, 12, 13) zu übermitteln, **dadurch gekennzeichnet, dass** die Basissendeempfängerstation (10) so konfiguriert ist, dass die Modifikationsinformationen (51) explizit oder implizit Informationen zur Menge der unter den modifizierten Übermittlungsbedingungen von der Basissendeempfängerstation (10) zu den Mobilstationen (11, 12, 13) zu übermittelnden Verkehrsdaten (60) übermitteln, wobei das bevorzugte Zeitintervall (65) ein vorbestimmtes Zeitintervall ist, wobei die Basissendeempfängerstation (10) so konfiguriert ist, dass die Modifikationsinformationen (51) explizit oder implizit Informationen über den Anfang und das Ende des bevorzugten Zeitintervalls (65) übermitteln, und wobei die Basissendeempfängerstation (10) so konfiguriert ist, dass die Modifikationsinformationen (51) explizit oder implizit Informationen über die Menge der unter den modifizierten Übermittlungsbedingungen von der Basissendeempfängerstation (10) zu den Mobilstationen (11, 12, 13) zu übermittelnden relevanten Nicht-Echtzeit-Verkehrsdaten (60) übermitteln.

9. Programm, das einen computerlesbaren Programmcode zur Steuerung einer Basissendeempfängerstation (10) für eine Zelle (15) eines zellularen Mobilfunknetzes umfasst, wobei die Zelle (15) eine Mehrzahl von Mobilstationen (11, 12, 13) umfasst, wobei die Basissendeempfängerstation (10) eine Steuernachricht (50) an die Mobilstationen (11, 12, 13) übermittelt, wobei die Steuernachricht (50) Modifikationsinformationen (51) umfasst, die anzeigen, dass während einem bevorzugten Zeitintervall (65) modifizierte Übermittlungsbedingungen angewandt werden, wobei die modifizierten Übermittlungsbedingungen angewandt werden für eine Übermittlungsanforderung (59) einer der Mobilstationen (11, 12, 13) an die Basissendeempfängerstation (10) innerhalb des bevorzugten Zeitintervalls (65), durch welche die Basissendeempfängerstation (10) aufgefordert wird, relevante Nicht-Echtzeit-Verkehrsdaten (60) an eine der Mobilstationen (11, 12, 13) zu übermitteln, **dadurch gekennzeichnet, dass** die Modifikationsinformationen (51) explizit oder implizit Informationen zur Menge der unter den modifizierten Übermittlungsbedingungen von der Basissendeempfängerstation (10) zu den Mobilstationen (11, 12, 13) zu übermittelnden Verkehrsdaten (60) übermitteln, wobei das bevorzugte Zeitintervall (65) ein vorbestimmtes Zeitintervall ist, wobei die Modifikationsinformationen (51) explizit oder implizit Informationen über den Anfang und das Ende des bevorzugten Zeitintervalls (65) übermitteln, und wobei die Modifikationsinformationen (51) explizit oder implizit Informationen über die Menge der unter den modifizierten Übermittlungsbedingungen von der Basissendeempfängerstation (10) zu den Mobilstationen (11, 12, 13) zu übermittelnden relevanten Nicht-Echtzeit-Verkehrsdaten (60) übermitteln.

10. Computerprogrammprodukt, das einen computerlesbaren Programmcode nach Anspruch 9 zum Steuern einer Basissendeempfängerstation (10) umfasst.

## Revendications

1. Procédé d'amélioration de l'efficacité de communication dans une cellule (15) d'un réseau radio mobile cellulaire, le procédé comprenant les étapes consistant à :
fournir une station émettrice-réceptrice de base (10) et une pluralité de stations mobiles (11, 12, 13) dans la cellule de réseau radio mobile (15),
transmettre un message de commande (50) de la station émettrice-réceptrice de base (10) aux stations mobiles (11, 12, 13),
le message de commande (50) comprenant une information de modification (51) indiquant que des conditions de transmission modifiées sont appliquées pendant un intervalle de temps préféré (65), dans lequel pour une requête de transmission (59) de l'une des stations mobiles (11, 12, 13) à la station émettrice-réceptrice de base (10) dans l'intervalle de temps préféré (65) dans lequel la station émettrice-réceptrice de base (10) est invitée à transmettre des données de trafic connexes non en temps réel (60) à l'une des stations mobiles (11, 12, 13), les conditions de transmission modifiées sont appliquées, **caractérisé en ce que** l'information de modification (51) transmet explicitement ou implicitement une information sur la quantité de données de trafic (60) à transmettre de la station émettrice-réceptrice de base (10) aux stations mobiles (11, 12, 13) dans les conditions de transmission modifiées, dans lequel l'intervalle de temps préféré (65) est un intervalle de temps prédéterminé, dans lequel l'information de modification (51) transmet explicitement ou implicitement une information sur le début et la fin de l'intervalle de temps préféré (65), et dans lequel l'information de modification (51) transmet explicitement ou implicitement une information sur la quantité de données de trafic connexes non en temps réel (60) à transmettre de la station émettrice-réceptrice de base (10) aux stations mobiles (11, 12, 13) dans les conditions de transmission modifiées.

2. Procédé selon la revendication 1, dans lequel le message de commande (50) est un message de radiodiffusion cellulaire.

3. Procédé selon la revendication 1 ou 2, dans lequel l'intervalle de temps préféré (65) est un intervalle de temps prédéterminé, et dans lequel l'information de modification (51) transmet explicitement ou implicitement une information sur le début et la fin de l'intervalle de temps préféré (65).

4. Procédé selon la revendication 1 ou 2, dans lequel l'information de modification (51) transmet explicitement ou implicitement une information uniquement sur le début de l'intervalle de temps préféré (65), et dans lequel une information de normalisation (53) sur la fin de l'intervalle de temps préféré (65) est transmise par l'intermédiaire d'un autre message de commande (52) de la station émettrice-réceptrice de base (10) aux stations mobiles (11, 12, 13) dans la cellule (15) du réseau radio mobile cellulaire.

5. Procédé selon la revendication 1, dans lequel l'information de modification (51) indique que dans l'intervalle de temps préféré (65), un prix inférieur pour la transmission des données de trafic (60) doit être appliqué.

6. Procédé selon la revendication 1, dans lequel le message de commande (50) comprenant l'information de modification (51) indiquant que des conditions de transmission modifiées sont appliquées pendant un intervalle de temps préféré (65) est transmis en fonction de la charge de trafic de la cellule (15) du réseau radio mobile cellulaire ou en fonction de la charge de trafic de la cellule (15) et des cellules adjacentes du réseau radio mobile cellulaire.

7. Système d'amélioration de l'efficacité de communication dans une cellule (15) d'un réseau radio mobile cellulaire, le système comprenant une station émettrice-réceptrice de base (10) et une pluralité de stations mobiles (11, 12, 13) dans la cellule de réseau radio mobile (15), dans lequel le système est conçu de sorte qu'un message de commande (50) soit transmis de la station émettrice-réceptrice de base (10) aux stations mobiles (11, 12, 13), le message de commande (50) comprenant une information de modification (51) indiquant que des conditions de transmission modifiées sont appliquées pendant un intervalle de temps préféré (65), dans lequel le système est conçu de sorte que pour une requête de transmission (59) de l'une des stations mobiles (11, 12, 13) à la station émettrice-réceptrice de base (10) dans l'intervalle de temps préféré (65) dans lequel la station émettrice-réceptrice de base (10) est invitée à transmettre des données de trafic connexes non en temps réel (60) à l'une des stations mobiles (11, 12, 13), les conditions de transmission modifiées soient appliquées, **caractérisé en ce que** le système est conçu de sorte que l'information de modification (51) transmette explicitement ou implicitement une information sur la quantité de données de trafic (60) à transmettre de la station émettrice-réceptrice de base (10) aux stations mobiles (11, 12, 13) dans les conditions de transmission modifiées, dans lequel l'intervalle de temps préféré (65) est un intervalle de temps prédéterminé, dans lequel le système est conçu de sorte que l'information de modification (51) transmette explicitement ou implicitement une information sur le début et la fin de l'intervalle de temps préféré (65), et dans lequel le système est conçu de sorte que l'information de modification (51) transmette explicitement ou implicitement une information sur la quantité de données de trafic connexes non en temps réel (60) à transmettre de la station émettrice-réceptrice de base (10) aux stations mobiles (11, 12, 13) dans les conditions de transmission modifiées.

8. Station émettrice-réceptrice de base (10) pour une cellule (15) d'un réseau radio mobile cellulaire, la cellule (15) comprenant une pluralité de stations mobiles (11, 12, 13), dans lequel la station émettrice-réceptrice de base (10) est conçue de sorte qu'elle transmette un message de commande (50) aux stations mobiles (11, 12, 13), le message de commande (50) comprenant une information de modification (51) indiquant que des conditions de transmission modifiées sont appliquées pendant un intervalle de temps préféré (65), dans lequel la station émettrice-réceptrice de base (10) est conçue de sorte que pour une requête de transmission (59) de l'une des stations mobiles (11, 12, 13) à la station émettrice-réceptrice de base (10) dans l'intervalle de temps préféré (65) dans lequel la station émettrice-réceptrice de base (10) est invitée à transmettre les données de trafic connexes non en temps réel (60) à l'une des stations mobiles (11, 12, 13), les conditions de transmission modifiées soient appliquées, **caractérisé en ce que** la station émettrice-réceptrice de base (10) est conçue de sorte que l'information de modification (51) transmette explicitement ou implicitement une information sur la quantité de données de trafic (60) à transmettre de la station émettrice-réceptrice de base (10) aux stations mobiles (11, 12, 13) dans les conditions de transmission modifiées, dans lequel l'intervalle de temps préféré (65) est un intervalle de temps prédéterminé, dans lequel la station émettrice-réceptrice de base (10) est conçue de sorte que l'information de modification (51) transmette explicitement ou implicitement une information sur le début et la fin de l'intervalle de temps préféré (65), et dans lequel la station émettrice-réceptrice de base (10) est conçue de sorte que l'information de modification (51) transmette explicitement ou implicitement une information sur la quantité de données de trafic connexes non en temps réel (60) à transmettre de la station émettrice-réceptrice de base (10) aux stations mobiles (11, 12, 13) dans les conditions de transmission modifiées.

9. Programme comprenant un code de programme lisible par ordinateur pour commander une station émettrice-réceptrice de base (10) pour une cellule (15) d'un réseau radio mobile cellulaire, la cellule (15) comprenant une pluralité de stations mobiles (11, 12, 13), dans lequel la station émettrice-réceptrice de base (10) transmet un message de commande (50) aux stations mobiles (11, 12, 13), le message de commande (50) comprenant une information de modification (51) indiquant que des conditions de transmission modifiées sont appliquées pendant un intervalle de temps préféré (65), dans lequel pour une requête de transmission (59) de l'une des stations mobiles (11, 12, 13) à la station émettrice-réceptrice de base (10) dans l'intervalle de temps préféré (65) dans lequel il est demandé à la station émettrice-réceptrice de base (10) de transmettre des données de trafic connexes non en temps réel (60) à l'une des stations mobiles (11,12, 13), les conditions de transmission modifiées sont appliquées, **caractérisé en ce que** l'information de modification (51) transmet explicitement ou implicitement une information sur la quantité de données de trafic (60) à transmettre de la station émettrice-réceptrice de base (10) aux stations mobiles (11, 12, 13) dans les conditions de transmission modifiées, dans lequel l'intervalle de temps préféré (65) est un intervalle de temps prédéterminé, dans lequel l'information de modification (51) transmet explicitement ou implicitement une information sur le début et la fin de l'intervalle de temps préféré (65), et dans lequel l'information de modification (51) transmet explicitement ou implicitement une information sur la quantité de données de trafic connexes non en temps réel (60) à transmettre de la station émettrice-réceptrice de base (10) aux stations mobiles (11, 12, 13) dans les conditions de transmission modifiées.

10. Produit de programme informatique comprenant un code de programme lisible par ordinateur selon la revendication 9 pour commander une station émettrice-réceptrice de base (10).
